(19) Europäisches Patentamt
European Patent Office
Office européen des brevets

(11) EP 4 398 375 B1

(12) **EUROPEAN PATENT SPECIFICATION**

(45) Date of publication and mention of the grant of the patent:
**14.01.2026 Bulletin 2026/03**

(21) Application number: **22878891.5**

(22) Date of filing: **05.10.2022**

(51) International Patent Classification (IPC):
***H01M 10/42*** *(2006.01)* ***H01M 4/38*** *(2006.01)*
***H01M 10/052*** *(2010.01)* ***H01M 4/505*** *(2010.01)*
***H01M 4/525*** *(2010.01)* ***H01M 4/1395*** *(2010.01)*
***H01M 4/04*** *(2006.01)* ***H01M 4/131*** *(2010.01)*
***H01M 10/0525*** *(2010.01)* ***H01M 4/02*** *(2006.01)*

(52) Cooperative Patent Classification (CPC):
**H01M 10/0525; H01M 4/131; H01M 4/386; H01M 4/505; H01M 4/525;** H01M 2004/021; H01M 2010/4292; Y02E 60/10; Y02P 70/50

(86) International application number:
**PCT/KR2022/015006**

(87) International publication number:
**WO 2023/059070 (13.04.2023 Gazette 2023/15)**

(54) **LITHIUM SECONDARY BATTERY**

LITHIUMSEKUNDÄRBATTERIE

BATTERIE SECONDAIRE AU LITHIUM

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **05.10.2021 KR 20210131946**

(43) Date of publication of application:
**10.07.2024 Bulletin 2024/28**

(73) Proprietor: **LG Energy Solution, Ltd.**
**Seoul 07335 (KR)**

(72) Inventors:
- **PARK, Seung Won**
  **Daejeon 34122 (KR)**
- **PARK, Hyun Woo**
  **Daejeon 34122 (KR)**
- **KWON, Yo Han**
  **Daejeon 34122 (KR)**
- **LEE, Jae Wook**
  **Daejeon 34122 (KR)**
- **JUN, Chan Soo**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**EP-A1- 3 863 105**
**WO-A1-2014/073217**
**JP-A- 2016 126 976**
**JP-A- 2018 179 682**
**JP-B2- 6 511 222**
**KR-A- 20200 089 182**
**US-A1- 2013 149 609**
**US-A1- 2020 036 035**
**US-A1- 2020 251 728**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 398 375 B1

## Description

### TECHNICAL FIELD

This application claims priority from Korean Patent Application Nos. 10-2021-0131946, filed on October 5, 2021, and 10-2022-0127249, filed on October 5, 2022. The present invention relates to a lithium secondary battery, and more particularly, to a lithium secondary battery using silicon (Si) particles as a negative electrode active material.

### BACKGROUND ART

Recently, lithium secondary batteries have been highlighted as an energy source for electric vehicles. The spread of electric vehicles brings with it a rising demand for lithium secondary batteries capable of providing a longer mileage per single charge and shortening the time for quick charging.

Lithium secondary batteries are generally prepared through a method as follows. An electrode assembly is formed by disposing a separator between a positive electrode including a positive electrode active material formed of a transition metal oxide containing lithium and a negative electrode including a negative electrode active material capable of storing lithium ions, inserting the electrode assembly into a battery case, injecting a non-aqueous electrolyte that becomes a medium for delivering lithium ions, and then sealing the battery case. The non-aqueous electrolyte is generally composed of a lithium salt and an organic solvent capable of dissolving the lithium salt. Carbon-based materials such as natural graphite or artificial graphite have been typically used as a negative electrode active material for lithium secondary batteries. However, since the carbon-based negative electrode active materials have small capacity and a low rate of reaction with lithium, secondary batteries to which the carbon-based negative electrode active materials are applied are not capable enough to provide high capacity and quick charging performance.

In response, efforts have been made to develop lithium secondary batteries using a silicon-based negative electrode active material having 10 times higher theoretical capacity compared to a carbon-based material. The silicon-based negative electrode active material has a higher theoretical capacity than the carbon-based material, and has a high rate of reaction with lithium to improve capacity characteristics and quick charging performance, but upon charging, has a rapid volume expansion, which may cause damage to a negative electrode and disconnection of a conductive path, resulting in rapid degradation in battery performance.

Accordingly, there remains a need for development of lithium secondary batteries exhibiting excellent lifespan characteristics even with the use of a silicon-based negative electrode active material.

US 2020/0036035 A1 describes a lithium ion battery and a method for producing the lithium ion battery.

US 2020/0251728 A1 concerns a lithium secondary battery wherein there is a pre-lithiated negative electrode such that a total irreversible capacity of a positive electrode is greater than a total irreversible capacity of the negative electrode while satisfying 150 < (negative electrode discharge capacity/lithium secondary battery discharge capacity)×100 < 300, and a relative potential of the negative electrode with respect to lithium metal in an operating voltage range of the lithium secondary battery is in a range of -0.1 V to 0.7 V. EP 3 863 105 concerns a secondary battery including a negative electrode having a negative electrode active material layer containing a negative electrode active material, a positive electrode facing the negative electrode and having a positive electrode active material layer containing a positive electrode active material, a separator interposed between the negative electrode and the positive electrode, and an electrolyte, wherein the negative electrode active material includes a silicon-based active material and an N/P ratio calculated by a specific equation is 1.92 to 2.60.

US 2013/0149609 relates to an electrochemically active material comprising a lithium metal oxide, wherein about 5 mole percent of the transition metals can be substituted with a metal dopant having layered-layered-spinel crystal phases.

### DISCLOSURE OF THE INVENTION

### TECHNICAL PROBLEM

An aspect of the present invention provides a lithium secondary battery exhibiting excellent lifespan characteristics as well as high capacity characteristics by using silicon (Si) particles as a negative electrode active material.

### TECHNICAL SOLUTION

According to an aspect of the present invention, there is provided a lithium secondary battery including: a negative electrode including a negative electrode active material; a positive electrode including a positive electrode active material; a separator interposed between the negative electrode and the positive electrode; and an electrolyte, wherein the negative electrode active material includes silicon particles, the positive electrode active material includes an overlithiated

manganese-based oxide represented by Formula 1 below, and a Si charge depth represented by Equation 1 below is 30% to 60%, and a Si discharge depth represented by Equation 2 below is 10% or greater.

[Formula 1] $Li_aNi_bCo_cMn_dM_eO_2$

In Formula 1 above, 1 < a, 0≤b≤0.5, 0≤c≤0.1, 0.5≤d<1.0, and 0≤e≤0.2 are satisfied, and M is at least one selected from the group consisting of Al, B, Co, W, Mg, V, Ti, Zn, Ga, In, Ru, Nb, Sn, Sr, and Zr.

Equation 1: Si charge depth (%) = { (positive electrode loading amount+ pre-lithiation capacity of negative electrode)/negative electrode loading amount} ×100

In Equation 1 above, the positive electrode loading amount indicates capacity per unit area of the positive electrode (unit: $mAh/cm^2$), the negative electrode loading amount indicates capacity per unit area of the negative electrode (unit: $mAh/cm^2$), and the pre-lithiation capacity of the negative electrode indicates capacity per unit area (unit: $mAh/cm^2$) of lithium (Li) inserted into the negative electrode through pre-lithiation.

Equation 2: Si discharge depth (%) = {(positive electrode loading amount + pre-lithiation capacity of negative electrode - discharge loading amount)/negative electrode loading amount} ×100

In Equation 2 above, the positive electrode loading amount indicates capacity per unit area of the positive electrode (unit: $mAh/cm^2$), the negative electrode loading amount indicates capacity per unit area of the negative electrode (unit: $mAh/cm^2$), the pre-lithiation capacity of the negative electrode indicates capacity per unit area (unit: $mAh/cm^2$) of lithium (Li) inserted into the negative electrode through pre-lithiation, and the discharge loading amount indicates a value obtained by dividing discharge capacity of a secondary battery by positive electrode area at discharge cut-off voltage.

## ADVANTAGEOUS EFFECTS

A lithium secondary battery according to the present invention is designed such that Si charge depth and Si discharge depth satisfy specific ranges, and thus exhibits excellent lifespan characteristics in spite of using Si particles as a negative electrode active material. Meanwhile, since Si particles have excellent reactivity with lithium and capacity characteristics compared to carbon-based negative electrode active materials and/or SiOx-based negative electrode active materials, a lithium secondary battery of the present invention to which the Si particles are applied may exhibit excellent capacity characteristics and quick charging performance. That is, the lithium secondary battery according to the present invention exhibits excellent capacity characteristics, lifespan characteristics, and quick charging performance.

In addition, as used herein, when an overlithiated manganese-based oxide in which a $Li_2MnO_3$ phase having a rock salt structure and a $LiMO_2$ phase having a layered structure (where M is Ni, Co, Mn) are mixed is used as a positive electrode active material, pre-lithiation of a Si negative electrode may be performed with excess lithium generated from the $LiMO_2$ phase by performing an activation process at a high voltage of 4.6 V or more, without the use of a sacrificial positive electrode material for negative electrode compensation or without a separate process for pre-lithiation.

## MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present invention, the term "primary particle" indicates a particle unit having no observable grain boundaries when observed in a visual field of 5000 to 20000 magnification, using a scanning electron microscope. The term "average particle diameter of primary particles" indicates an arithmetic mean value calculated after measuring particle diameters of primary particles observed in scanning electron microscope images.

In the present invention, the term "secondary particle" is a particle in which a plurality of primary particles are aggregated.

In the present invention, the term "average particle diameter $D_{50}$" indicates a particle size with respect to 50% in the volume accumulated particle size distribution of particle powder to be measured (e.g., positive electrode active material powder, negative electrode active material powder, and the like). The average particle diameter D50 may be measured by using a laser diffraction method. For example, when it comes to measuring the "average particle diameter D50", powder of particles to be measured is dispersed in a dispersion medium, the dispersion medium is introduced into a commercial laser diffraction particle size measurement instrument (e.g., Microtrac MT 3000) and irradiated with ultrasonic waves having a frequency of about 28 kHz and an output of 60 W to obtain a volume accumulated particle size distribution graph, and the particle diameter at 50% of the volume accumulation may then be calculated.

Hereinafter, the present invention will be described in detail.

Si has excellent capacity characteristics and lithium reactivity compared to carbon-based negative electrode active materials such as graphite as well as silicon-based negative electrode active materials such as SiOx and SiC. Therefore, when Si is used as a negative electrode active material, improved energy density and quick charging performance may be obtained. However, since Si has a large volume change upon charging/discharging to cause rapid degradation of a negative electrode upon charging/discharging, when Si is used as a negative electrode active material, satisfactory lifespan characteristics were hardly achieved. As a result of the present inventors' continuous research efforts to improve lifespan characteristics of lithium secondary batteries using Si as a negative electrode active material, the inventors have found out that when batteries are designed such that Si charge depth and Si discharge depth satisfy specific ranges, excellent lifespan characteristics may be obtained even with the use of Si as a negative electrode active material, thereby achieving the present invention.

Specifically, a lithium secondary battery according to the present invention includes a negative electrode including a negative electrode active material; a positive electrode including a positive electrode active material; a separator interposed between the negative electrode and the positive electrode; and an electrolyte, the negative electrode active material includes silicon particles, the positive electrode active material includes an overlithiated manganese-based oxide represented by Formula 1 below, Si charge depth represented by Equation 1 below is 30% to 60%, and Si discharge depth represented by Equation 2 below is 10% or greater. Preferably, the negative electrode active material does not include other types of negative electrode active material and may be formed of silicon alone.

[Formula 1] $Li_aNi_bCo_cMn_dM_eO_2$

In Formula 1 above, $1<a$, $0\leq b\leq 0.5$, $0\leq c\leq 0.1$, $0.5\leq d<1.0$, and $0\leq e\leq 0.2$ are satisfied, and M is at least one selected from the group consisting of Al, B, Co, W, Mg, V, Ti, Zn, Ga, In, Ru, Nb, Sn, Sr, and Zr.

Equation 1: Si charge depth (%) = { (positive electrode loading amount+ pre-lithiation capacity of negative electrode)/negative electrode loading amount} ×100

In Equation 1 above, the positive electrode loading amount indicates capacity per unit area of the positive electrode (unit: $mAh/cm^2$), the negative electrode loading amount indicates capacity per unit area of the negative electrode (unit: $mAh/cm^2$), and the pre-lithiation capacity of the negative electrode indicates capacity per unit area (unit: $mAh/cm^2$) of lithium (Li) inserted into the negative electrode through pre-lithiation. In this case, the positive electrode loading amount is a capacity value per unit area of the positive electrode measured when a secondary battery is charged/discharged in a voltage range of 2.25 V to 4.45 V.

Equation 2: Si discharge depth (%) = {(positive electrode loading amount + pre-lithiation capacity of negative electrode - discharge loading amount)/negative electrode loading amount} ×100

In Equation 2 above, the positive electrode loading amount indicates capacity per unit area of the positive electrode (unit: $mAh/cm^2$), the negative electrode loading amount indicates capacity per unit area of the negative electrode (unit: $mAh/cm^2$), the pre-lithiation capacity of the negative electrode indicates capacity per unit area (unit: $mAh/cm^2$) of lithium (Li) inserted into the negative electrode through pre-lithiation, and the discharge loading amount indicates a value obtained by dividing discharge capacity of a secondary battery by positive electrode area at discharge cut-off voltage.

The Si charge depth is a value indicating the extent of bonding between Si and Li in a fully charged state (i.e., SOC=100), and according to the inventors' research, when the Si charge depth is greater than 60% or less than 30%, lifespan characteristics were turned out to be rapidly deteriorated. Specifically, it was shown that when the Si charge depth was greater than 60%, Si had a rapid volume expansion, resulting in reduced energy density and lifespan characteristics, and when the Si charge depth was less than 30%, reactions became even more ununiform and lifespan characteristics were deteriorated. Preferably, the Si charge depth may be 40% to 60%, and more preferably 45% to 60%.

The Si charge depth may be adjusted by controlling a positive electrode loading amount, a negative electrode loading amount, and/or a pre-lithiation degree of a negative electrode, and the positive electrode loading amount and/or the negative electrode loading amount may be set in consideration of the type and content of active materials used, the porosity of active material layers, and/or the thickness of active material layers.

Meanwhile, the Si discharge depth indicates capacity of lithium remaining in a negative electrode at discharge cut-off voltage. According to the inventors' research, even when the Si charge depth satisfies 30% to 60%, lifespan characteristics are rapidly reduced when the Si discharge depth is less than 10%. Preferably, the Si discharge depth may be 10% to 30%, more preferably 10% to 25%, even more preferably 15% to 25%, and even more preferably 17% to 25%.

The Si discharge depth is affected from a combination of the ratio of negative electrode capacity to positive electrode capacity (N/P ratio), the driving voltage range of batteries (charge/discharge cut-off voltage), and the pre-lithiation degree of a negative electrode, and may be adjusted by appropriately controlling these factors.

Meanwhile, the lithium secondary battery of the present invention may be designed such that the Si usage range is 10% to 50%, preferably 20% to 40%, and more preferably 30% to 40%. The Si usage range indicates a difference between Si charge depth and Si discharge depth, as shown in Equation 3 below, and when the Si usage range is high, energy density increases, but lifespan characteristics are remarkably deteriorated, and when the Si usage range is too low, energy density decreases.

Si usage range (%) = Si charge depth - Si discharge depth    Equation 3:

Meanwhile, in the lithium secondary battery according to the present invention, an N/P ratio, which is a percentage of negative electrode loading amount to positive electrode loading amount, may be 150% to 300%, preferably 180% to 300%, and more preferably 190% to 300%. When the N/P ratio, which is the percentage of the negative electrode loading amount to the positive electrode loading amount, is less than the above range, the Si charge depth may increase to cause a decrease in life, and when the N/P ratio is greater than the above range, Si reaction non-uniformity on an electrode surface portion may increase to cause a decrease in life.

The lithium secondary battery according to the present invention designed to satisfy the above conditions may exhibit excellent energy density and quick charging performance using Si particles, and exhibit excellent lifespan characteristics. Specifically, in the lithium secondary battery according to the present invention, the number of cycles to reach 80% life may be 400 or more, preferably 450 or more, and more preferably 500 or more.

Hereinafter, each component of the lithium secondary battery according to the present invention will be described in detail.

## Negative electrode

A negative electrode according to the present invention may include silicon (Si) as a negative electrode active material, and preferably, 100% of silicon (Si) may be used as the negative electrode active material. Silicon used in the present invention may be pure silicon (Pure Si) which is not bonded to other metals or oxygen. To be specific, the negative electrode according to the present invention may include a negative electrode collector and a negative electrode active material layer formed on at least one surface of the negative electrode collector, and the negative electrode active material layer may include silicon as a negative electrode active material. Si has excellent capacity characteristics and lithium reactivity compared to carbon-based negative electrode active materials such as graphite as well as silicon-based negative electrode active materials such as SiOx and SiC. Therefore, when Si is used as a negative electrode active material, improved energy density and quick charging performance may be obtained.

The silicon may have an average particle diameter (D50) of 1 μm to 10 μm, specifically 2 μm to 8 μm, and more specifically 3 μm to 7 μm. When the average particle diameter is less than 5 μm, the specific surface area of the particles is excessively increased to cause an excessive increase in viscosity of a negative electrode slurry. Accordingly, the particles constituting the negative electrode slurry are not actively dispersed. In addition, when the size of the silicon particles is too small, a contact area between the silicon particles and conductive materials is reduced by composites formed of a conductive material and a binder in the negative electrode slurry, and accordingly, a conductive network is more likely to be disconnected to reduce capacity retention. Meanwhile, when the average particle diameter is greater than 10 μm, excessively large silicon particles are present to make a surface of the negative electrode uneven, and thus current density becomes ununiform upon charging/discharging. In addition, when the silicon particles are excessively large, phase stability of the negative electrode slurry is not secured to reduce processability. Accordingly, the capacity retention of a battery is reduced.

Meanwhile, the BETspecific surface area of the silicon is preferably 0.01 $m^2/g$ to 150.0 $m^2/g$, more preferably 0.1 $m^2/g$ to 100.0 $m^2/g$, particularly preferably 0.2 $m^2/g$ to 80.0 $m^2/g$, and most preferably 0.2 $m^2/g$ to 18.0 $m^2/g$. The BET specific surface area may be measured according to DIN 66131 using nitrogen.

In addition, the silicon may be present in a crystalline or amorphous form, and is preferably not porous. The silicon particles may be spherical particles or fragmented particles, but are not limited thereto, and may have a fibrous structure or may be present in the form of a silicon-containing film or coating.

The silicon may be included in an amount of 50 wt% or more, 60 wt% or more, preferably 65 wt% or more, more preferably 70 wt% or more, and 99 wt% or less, preferably 95 wt% or less, more preferably 90 wt% or less, and even more preferably 80 wt% or less, with respect to a total weight of the negative electrode active material layer.

Meanwhile, the negative electrode according to the present invention may further include other negative electrode active materials in addition to the silicon, as needed. The other negative electrode active materials may be SiOx ($0<x<2$), a carbon-based negative electrode active material, or the like. In this case, the carbon-based negative electrode active material may be, for example, artificial graphite, natural graphite, graphitized carbon fiber, amorphous

carbon, soft carbon, hard carbon, or the like, but is not limited thereto.

The other negative electrode active materials may be included in an amount of 50 wt% or less, preferably 45 wt% or less, and more preferably 30 wt% or less, with respect to the total weight of the negative electrode active material layer.

Meanwhile, the negative electrode active material layer may further include a conductive material and a binder, as needed.

The conductive material may be, for example, spherical or flaky graphite; a carbon-based material such as carbon black, acetylene black, Ketjen black, channel black, furnace black, lamp black, thermal black, carbon fiber, single-walled carbon nanotube, and multi-walled carbon nanotube; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.1 wt% to 40 wt%, 1 wt% to 30 wt%, or 5 wt% to 30 wt%, with respect to a total weight of the negative electrode active material layer.

Preferably, the negative electrode active material layer according to the present invention may include two or more types of conductive materials, and in this case, the conductive material may include a point-type conductive material and a plate-type conductive material.

The point-type conductive material may be used to improve conductivity of a negative electrode, and it is preferable to have conductivity without causing chemical changes. Specifically, the conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and polyphenylene derivatives, and may preferably include carbon black that has high conductivity and excellent dispersibility.

The point-type conductive material may have a BET specific surface area of 40 $m^2/g$ to 70 $m^2/g$, preferably 45 $m^2/g$ to 65 $m^2/g$, and more preferably 50 $m^2/g$ to 60 $m^2/g$.

The point-type conductive material may have a functional group content (volatile matter) of 0.01% to 0.05%, preferably 0.01% to 0.04%, and more preferably 0.01% to 0.03%.

The functional group content may be controlled according to the extent of heat treatment on the point-type conductive material. That is, in preparing the point-type conductive material, a high functional group content may indicate a great deal of foreign substances, and a low functional group content may indicate greater heat treatment processing, and the point-type conductive material according to the present application is characterized in that the point-type conductive material is partially heat-treated to satisfy the functional group content range.

The point-type conductive material may have a particle size of 10 nm to 100 nm, preferably 20 nm to 90 nm, and more preferably 20 nm to 60 nm.

The plate-type conductive material may serve to improve conductivity by increasing surface contact between silicon particles in the negative electrode, and also serve to suppress disconnection of a conductive path due to volume expansion, and may be indicated as a planar conductive material or a bulk-type conductive material.

The plate-type conductive material may include at least one selected from the group consisting of plate-type graphite, graphene, graphene oxide, and graphite flake, and may preferably be plate-type graphite.

The plate-type conductive material may have an average particle diameter (D50) of 2 $\mu m$ to 7 $\mu m$, specifically 3 $\mu m$ to 6 $\mu m$, and more specifically 4 $\mu m$ to 5 $\mu m$. When the above range is satisfied, dispersion is easily performed without causing an excessive increase in viscosity of a negative electrode slurry based on a sufficient particle size. Therefore, the dispersion effect is excellent when dispersion is performed using the same equipment and time.

The plate-type conductive material may have a BET specific surface area of 1 $m^2/g$ to 500 $m^2/g$, preferably 5 $m^2/g$ to 300 $m^2/g$.

In addition, the binder may be, for example, polyvinylidene fluoride (PVDF), a polyvinylidene fluoride-hexafluoropropylene copolymer (PVDF-co-HFP), polyvinyl alcohol, polyacrylic acid, polyacrylamide, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluorine rubber, or various copolymers thereof, and any one thereof or a mixture of two or more thereof may be used. The binder may be included in an amount of 1 wt% to 20 wt%, 2 wt% to 20 wt%, or 2 wt% to 10 wt%, with respect to a total weight of the negative electrode active material layer.

Meanwhile, the negative electrode may have a multi-layer structure in which a negative electrode active material layer is composed of a single layer or two or more layers. When the negative electrode active material layer has a multi-layer structure composed of two or more layers, each layer may have different types and/or contents of the negative electrode active material, the binder, and/or the conductive material.

For example, the negative electrode according to the present invention may have a two-layer structure, and the type of a negative electrode active material of a layer adjacent to a collector (hereinafter referred to as a lower layer) and the type of a negative electrode active material of an upper layer formed on the lower layer may be different. Specifically, in the negative electrode having a two-layer structure, the negative electrode active material of the lower layer may be silicon,

and the negative electrode active material of the upper layer may be SiOx (0<x<2).

Meanwhile, the negative electrode active material layer may have a porosity of 20% to 70% or 20% to 50%. When porosity of the negative electrode active material layer is too small, electrolyte impregnability may be reduced to deteriorate lithium mobility, and when the porosity is too large, energy density may be reduced.

Meanwhile, in the present invention, the negative electrode may be a pre-lithiated negative electrode.

For example, pre-lithiation of the negative electrode may be performed through a method of pressing or depositing lithium metal on a negative electrode active material layer, a method of inserting lithium into a negative electrode active material layer through an electrochemical method, a method of inserting a sacrificial positive electrode material included in a positive electrode or excess lithium included in a positive electrode active material into a negative electrode through an activation process, or a method of providing excess lithium to a positive electrode through an electrochemical method or a method of pressing or depositing lithium metal and then inserting the excess lithium provided to the positive electrode into a negative electrode through an activation process, and may be performed by combining two or more of the above methods.

More specifically, the pre-lithiation of a negative electrode in the present invention may be performed by inserting lithium generated when $Li_2MnO_3$ phase of the positive electrode active material is activated through an activation process at a high voltage of 4.6 V or more after cell assembly into the negative electrode. When the pre-lithiation of the negative electrode is performed through the method described above, a separate process for pre-lithiation is not needed, and the use of a sacrificial positive electrode material or the like may be minimized, thereby increasing positive electrode capacity.

When using the pre-lithiated negative electrode as described above, compared to a non-lithiated negative electrode, even upon discharging up to a relatively low cut-off voltage, lifespan characteristics are less deteriorated, and accordingly, the driving voltage range of a lithium secondary battery may be set to a relatively wide range to increase usable SOC.

Preferably, the negative electrode of the present invention may have a pre-lithiation degree, represented by Equation 4, of 5% to 50%, preferably 5% to 30%, and more preferably 5% to 20%.

Pre-lithiation degree (%) = {capacity per unit area of Li inserted into negative electrode through pre-lithiation / capacity per unit area of Si} $\times$ 100 Equation 4:

When the pre-lithiation degree of the negative electrode satisfies the above range, a lithium secondary battery having excellent capacity and lifespan characteristics may be obtained. Specifically, when the pre-lithiation degree of the negative electrode is too small, the discharge depth needs to be controlled to secure lifespan characteristics, and in this case, it may not be easy to sufficiently secure energy density. In addition, when the pre-lithiation degree of the negative electrode is too large, degeneration of silicon particles in an electrode may be accelerated to deteriorate capacity characteristics.

## Positive electrode

A positive electrode according to the present invention includes an overlithiated manganese-based oxide represented by Formula 1 as a positive electrode active material. To be specific, the positive electrode of the present invention may include a positive electrode collector and a positive electrode active material layer formed on at least one surface of the positive electrode collector, and the positive electrode active material layer may include a positive electrode active material containing an overlithiated manganese-based oxide represented by Formula 1.

[Formula 1] $Li_aNi_bCo_cMn_dM_eO_2$

In Formula 1 above, M may be at least one selected from the group consisting of Al, B, Co, W, Mg, V, Ti, Zn, Ga, In, Ru, Nb, Sn, Sr, and Zr.

Meanwhile, a is a molar ratio of Li in the overlithiated manganese-based oxide, and may satisfy $1<a$, $1.1\leq a\leq 1.5$, or $1.1\leq a\leq 1.3$. When a satisfies the above range, irreversible capacity of a Si negative electrode active material may be sufficiently compensated, and high capacity characteristics may be achieved.

b above is a molar ratio of Ni in the overlithiated manganese-based oxide, and may satisfy $0\leq b\leq 0.5$, $0.1\leq b\leq 0.4$, or $0.2\leq b\leq 0.4$.

c above is a molar ratio of Co in the overlithiated manganese-based oxide, and may satisfy $0\leq c\leq 0.1$, $0\leq c\leq 0.08$, or $0\leq c\leq 0.05$. When c is greater than 0.1, high capacity may be hardly achieved, and gas generation and greater degradation of a positive electrode active material may take place due to a greater oxygen-redox reaction, resulting in reduced lifespan.

d above is a molar ratio of Mn in the overlithiated manganese-based oxide, and may satisfy $0.5\leq d<1.0$, $0.50\leq d\leq 0.80$, or $0.50\leq d\leq 0.70$. When d is less than 0.5, the proportion of a rock salt phase becomes too small, so that

negative electrode irreversible compensation and capacity improvement are insignificant.

e above is a molar ratio of doping element M in the overlithiated manganese-based oxide, and may satisfy $0 \le e \le 0.2$, $0 \le e \le 0.1$, or $0 \le e \le 0.05$. When the doping element content is too high, capacity of an active material may be adversely affected.

The overlithiated manganese-based oxide has a structure in which a layered phase ($LiM'O_2$) and a rock salt phase ($Li_2MnO_3$) are mixed, and the rock salt phase is activated at a high voltage of 4.6 V or more to generate an excess of ions. Accordingly, when the overlithiated manganese-based oxide is used as a positive electrode active material as in the present invention, without a separate compensatory material or without a pre-lithiation process, excess lithium ions generated when the rock salt phase is activated through an activation process at a high voltage of 4.6 V or more are inserted into the negative electrode to produce a pre-lithiation effect in which irreversible capacity of the negative electrode is compensated.

Meanwhile, in the overlithiated manganese-based oxide represented by Formula 1 above, the molar ratio of Li to all metal elements excluding Li (Li/Me) may be 1.2 to 1.5, 1.25 to 1.5, or 1.25 to 1.4. When the Li/Me ratio satisfies the above range, rate characteristics and capacity characteristics are excellent. When the Li/Me ratio is too high, electrical conductivity decreases and a rock salt phase (Li2MnO3) increases, resulting in faster degradation, and when the Li/Me ratio is too low, energy density improvement is insignificant.

Meanwhile, the composition of the overlithiated manganese-based oxide may be represented by Formula 2 below.

[Formula 2] $$X\,Li_2MnO_3 \cdot (1-X)Li[Ni_{1-y-z-w}Mn_yCo_zM_w]O_2$$

In Formula 2 above, M may be at least one selected from the group consisting of metal ions Al, B, Co, W, Mg, V, Ti, Zn, Ga, In, Ru, Nb, Sn, Sr, and Zr.

X above indicates the ratio of Li2MnO3 phase in the overlithiated manganese-based oxide, and may satisfy $0.2 \le X \le 0.5$, $0.25 \le X \le 0.5$, or $0.25 \le X \le 0.4$. When the ratio of Li2MnO3 phase in the overlithiated manganese-based oxide satisfies the above range, irreversible capacity of a Si-based negative electrode active material may be sufficiently compensated and high capacity characteristics may be obtained.

y above is a molar ratio of Mn in the LiM'O2 layer, and may satisfy $0.4 \le y < 1$, $0.4 \le y \le 0.8$, or $0.4 \le y \le 0.7$.

z above is a molar ratio of Co in the LiM'O2 layer, and may satisfy $0 \le z \le 0.1$, $0 \le z \le 0.08$, or $0 \le z \le 0.05$. When z is greater than 0.1, gas generation and greater degradation of a positive electrode active material may take place, resulting in reduced lifespan.

w above is a molar ratio of doping element M in the LiM'O2 layer, and may satisfy $0 \le w \le 0.2$, $0 \le w \le 0.1$, or $0 \le w \le 0.05$.

Meanwhile, the positive electrode active material according to the present invention, as needed, may further include a coating layer on a surface of the overlithiated manganese-based oxide. When the positive electrode active material includes a coating layer, the coating layer prevents contact between the overlithiated manganese-based oxide and electrolyte to reduce side reactions of the electrolyte, thereby improving lifespan characteristics.

The coating layer may include a coating element M1, and the coating element M1 may be, for example, at least one selected from the group consisting of Al, B, Co, W, Mg, V, Ti, Zn, Ga, In, Ru, Nb, Sn, Sr, and Zr, preferably Al, Co, Nb, W, and a combination thereof, and more preferably Al, Co, and a combination thereof. Two or more types of the coating element M1 may be included, and for example, Al and Co may be included.

The coating element may be present in the form of an oxide in the coating layer, that is, M1Oz($1 \le z \le 4$).

The coating layer may be formed through a method such as dry coating, wet coating, chemical vapor deposition (CVD), physical vapor deposition (PVD), or atomic layer deposition (ALD). Among them, the coating layer is preferably formed through the atomic layer deposition method that provides formation of a wide coating layer area.

The formation area of the coating layer may be 10% to 100%, preferably 30% to 100%, and more preferably 50% to 100%, with respect to a total surface area of the overlithiated manganese-based oxide particles. When the coating layer formation area satisfies the above range, improvement in lifespan characteristics is significant.

Meanwhile, the positive electrode active material according to the present invention may be in the form of secondary particles in which a plurality of primary particles are aggregated, and the average particle diameter D50 of the secondary particles may be 2 μm to 10 μm, preferably 2 μm to 8 μm, and more preferably 4 μm to 8 μm. When the D50 of the positive electrode active material satisfies the above range, satisfactory electrode density may be obtained, and deterioration in capacity and rate characteristics may be minimized.

In addition, the positive electrode active material may have a BET specific surface area of 1 m2/g to 10 m2/g, 3 m2/g to 8 m2/g, or 4 m2/g to 6 m2/g. When the BET specific surface area of the positive electrode active material is too low, sufficient capacity may be hardly obtained due to insufficient reaction area with electrolyte, and when the specific surface area is too high, moisture absorption is fast and side reactions with the electrolyte are accelerated, making it difficult to secure lifespan characteristics.

In addition, the positive electrode according to the present invention preferably has an initial irreversible capacity

of about 5% to 70%, 5% to 50%, or 5% to 30%. The initial irreversible capacity of the positive electrode is a value measured with respect to 0.1 C as the ratio of high voltage charge capacity when a half cell is activated at a high voltage of 4.6 V or more to discharge capacity when a half cell is charged/discharged in a voltage range of 2.5 V to 4.4 V after manufacturing the half cell with the positive electrode and a lithium metal counter electrode.

When the initial irreversible capacity of the positive electrode satisfies the above range, the irreversible capacity of a Si negative electrode active material may be sufficiently compensated without using a separate compensation material such as a sacrificial positive electrode material.

Meanwhile, the overlithiated manganese-based oxide may be prepared by mixing a transition metal precursor with a lithium raw material and then firing the mixture.

The lithium raw material may be, for example, lithium-containing carbonate (e.g., lithium carbonate), hydrate (e.g., lithium hydroxide hydrate ($LiOH \cdot H_2O$), etc.), hydroxide (e.g., lithium hydroxide, etc.), nitrate (e.g., lithium nitrate ($LiNO_3$), etc.), chloride (e.g., lithium chloride (LiCl), etc.), and the like, may be used alone or as a mixture of two or more thereof.

Meanwhile, the transition metal precursor may be in the form of hydroxide, oxide, or carbonate. When a carbonate-type precursor is used, it is more preferable in that a positive electrode active material having a relatively high specific surface area may be obtained.

The transition metal precursor may be prepared through a co-precipitation process. For example, the transition metal precursor may be prepared by dissolving each transition metal-containing raw material in a solvent to prepare a metal solution, and then mixing the metal solution, an ammonium cation complexing agent, and a basic compound, followed by a co-precipitation reaction. In addition, as needed, an oxidizing agent or oxygen gas may be further added upon the co-precipitation reaction.

In this case, the transition metal-containing raw material may be acetate, carbonate, nitrate, sulfate, halide, sulfide, or the like of each transition metal. To be specific, the transition metal-containing raw material may be NiO, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, $Mn_2O_3$, $MnO_2$, $Mn_3O_4$ $MnCO_3$, $Mn(NO_3)_2$, $MnSO_4 \cdot H_2O$, manganese acetate, manganese halide, or the like.

The ammonium cation complexing agent may be at least one selected from the group consisting of $NH_4OH$, $(NH_4)_2SO_4$, $NH_4NO_3$, $NH_4Cl$, $CH_3COONH_4$, and $NH_4CO_3$.

The basic compound may be at least one selected from the group consisting of NaOH, $Na_2CO_3$, KOH, and $Ca(OH)_2$. The form of a precursor may vary depending on the type of a basic compound used. For example, when NaOH is used as a basic compound, a hydroxide-type precursor may be obtained, and when Na2CO3 is used as a basic compound, a carbonate-type precursor may be obtained. In addition, when a basic compound and an oxidizing agent are used together, an oxide-type precursor may be obtained.

Meanwhile, the transition metal precursor and the lithium raw material may be mixed in an amount such that a molar ratio of the total transition metal (Ni+Co+Mn):Li is 1:1.05 to 1:2, preferably 1: 1.1 to 1: 1.8, and more preferably 1: 1.25 to 1: 1.8.

Meanwhile, the firing may be performed at 600 °C to 1000 °C or 700 °C to 950 °C, and the firing may take 5 hours to 30 hours or 5 hours to 20 hours. In addition, the firing atmosphere may be an atmospheric atmosphere or an oxygen atmosphere, and for example, may be an atmosphere containing oxygen in an amount of 20% to 100% by volume.

Meanwhile, the positive electrode active material layer may further include a conductive material and a binder, in addition to a positive electrode active material.

The conductive material may be, for example, spherical or flaky graphite; a carbon-based material such as carbon black, acetylene black, Ketjen black, channel black, furnace black, lamp black, thermal black, carbon fiber, single-walled carbon nanotube, and multi-walled carbon nanotube; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.1 wt% to 20 wt%, 1 wt% to 20 wt%, or 1 wt% to 10 wt%, with respect to a total weight of the positive electrode active material layer.

In addition, the binder may be, for example, polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluorine rubber, or various copolymers thereof, and any one thereof or a mixture of two or more thereof may be used. The binder may be included in an amount of 1 wt% to 20 wt%, 2 wt% to 20 wt%, or 2 wt% to 10 wt%, with respect to a total weight of the positive electrode active material layer.

Meanwhile, the positive electrode according to the present invention may have an electrode density of about 2.5 $g/cm^3$ (g/cc) to 3.8 $g/cm^3$ (g/cc), 2.5 $g/cm^3$ (g/cc) to 3.5 $g/cm^3$ (g/ cc), or 3.0 $g/cm^3$ (g/cc) to 3.3 $g/cm^3$ (g/cc). When the electrode density of the positive electrode satisfies the above range, high energy density may be obtained.

## Separator

In the lithium secondary battery of the present invention, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer component may be used to secure heat resistance or mechanical strength, and the separator having a single-layer or multi-layer structure may be selectively used.

## Electrolyte

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used.

Any compound may be used as the lithium salt without particular limitation as long as it may provide lithium ions used in a lithium secondary battery. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiN(FSO_2)_2$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, or $LiB(C_2O_4)_2$ may be used. The lithium salt may be used in a concentration range of 0.1 M to 5.0 M.

In addition, additives may be included in the electrolyte for the purpose of increasing battery life, suppressing capacity reduction, preventing gas generation, and the like. As the additive, various additives used in the art, for example, fluoroethylene carbonate (FEC), vinylene carbonate (VC), vinylethylene carbonate (VEC), ethylene sulfate (ESa), lithium difluorophosphate (LiPO2F2), lithium bisoxalatoborate (LiBOB), lithium tetrafluoro borate (LiBF4), lithium difluorooxalato borate (LiDFOB), lithium difluorobisoxalatophosphate (LiDFBP), lithium tetrafluorooxalatophosphate (LiTFOP), lithium methyl sulfate (LiMS), lithium ethyl sulfate (LiES), propanesultone (PS), propensultone (PRS), succinonitrile (SN), adiponitrile (AND), 1,3,6-hexanetricarbonitrile (HTCN), 1,4-dicyano-2-butene (DCB), fluorobenzene (FB), ethyldi(pro-2-y-1-yl) phosphate (EDP), 5-methyl-5propargyloxylcarbonyl-1,3-dioxane-2-one (MPOD), a compound represented by Formula A below (e.g., cyanoethyl polyvinyl alcohol, PVA-CN), a compound represented by Formula B (e.g., heptafluorobutyric cyanoethyl polyvinyl alcohol, PF-PVA-CN), a compound represented by Formula C (e.g., propargyl 1H-imidazole-1-carboxylate, PAC), and/or a compound represented by Formula D (e.g., arylimidazole such as C6H8N2), and the like may be used.

[Formula A]

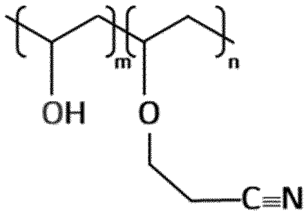

In Formula A above, m and n are each independently an integer of 1 to 100.

[Formula B]

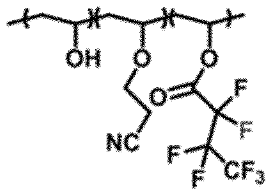

[Formula C]

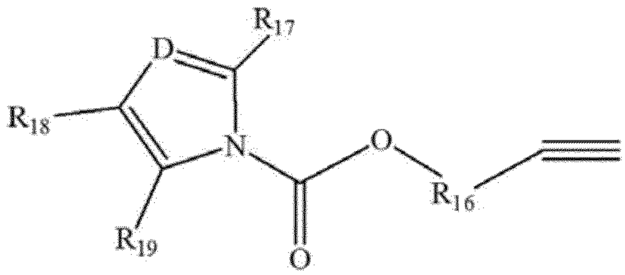

In Formula C above, $R_{16}$ is a linear or non-linear alkylene group having 1 to 3 carbon atoms, $R_{17}$ to $R_{19}$ are each independently at least one selected from the group consisting of hydrogen, an alkyl group having 1 to 3 carbon atoms, and -CN, and D is CH or N.

[Formula D]

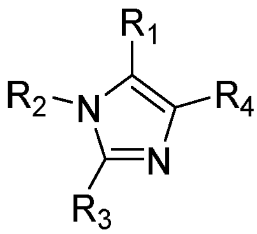

In Formula D above,

$R_1$ $R_2$, $R_3$, and $R_4$ may each independently include hydrogen; or an alkyl group having 1 to 5 carbon atoms, a cyano group (CN), an allyl group, a propargyl group, an amine group, a phosphate group, an ether group, a benzene group, a cyclohexyl group, a silyl group, an isocyanate group (-NCO), a fluorine group (-F).

Preferably, compounds acting as oxygen scavengers may be used as the additive. Phosphite-based structure materials such as tris tri(methylsilyl)phosphite (TMSPi), tris trimethylphosphite (TMPi), and tris(2,2,2-trifluoroethyl) phosphite (TTFP) (See Formula E); tris tri(methylsilyl)phosphate (TMSPa); polyphosphoric acid trimethylsilyl ester (PPSE); tris(pentafluorophenyl)borane (TPFPB); compounds including a coumarin structure such as coumarin-3-carbonitrile (CMCN), 7-ethynylcoumarin (ECM), 3-acetylcoumarin (AcCM), and 3-(trimethylsilyl)coumarin (TMSCM) (See Formula F); 3-[(trimethylsilyl)oxyl]-2H-1-benzopyran-2-one (TMSOCM), 3-(2-propyn-1-yloxyl)-2H-1-benzopyran-2-one

(POCM), 2-propyn-1-yl-2-oxo-2H-1-benzopyran-3-carboxylate (OBCM), and the like may be used as the compounds acting as oxygen scavengers.

[Formula E]

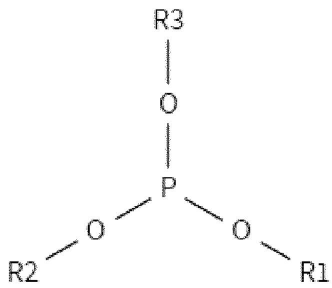

[Formula F]

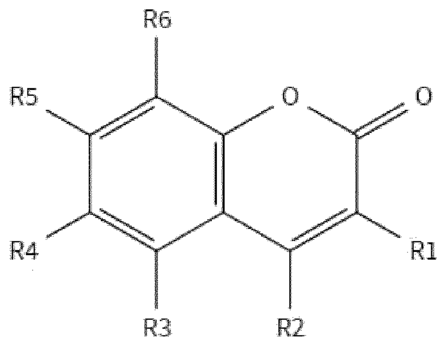

In Formulas E and F above, R1 to R6 may each independently include a substituted or unsubstituted alkenyl group having 2 to 20 carbon atoms and a substituted or unsubstituted alkynyl group having 2 to 20 carbon atoms, a cyano group, a fluoro group (F), an ether group (C-O-C), a carboxyl group (O-C=O), a trimethylsilyl group (-TMS), an isocyanate group (-NCO), and/or an isothiocyanate group (-NCS).

Hereinafter, the present invention will be described in more detail through specific examples.

**Preparation Example 1**

<Preparation of positive electrode>

A positive electrode active material, a conductive material, and a PVDF binder were mixed in N-methylpyrrolidone in a weight ratio of 96:1:3 to prepare a positive electrode slurry. In this case, $Li_{1.143}[Ni_{0.35}Mn_{0.65}]_{0.857}O_2$ coated with Al (1500 ppm) was used as the positive electrode active material, and a carbon nanotube was used as the conductive material.

The positive electrode slurry was applied onto an aluminum collector sheet, dried, and then rolled to prepare a positive electrode having a loading amount of 3.50 $mAh/cm^2$.

<Preparation of negative electrode>

A negative electrode active material, a conductive material, and an acrylic binder were mixed in water in a weight ratio of 70: 20.3: 9.7 to prepare a negative electrode slurry. In this case, Si particles having an average particle diameter of 5 μm (from Waker) were used as the negative electrode active material, and carbon black, graphite, and CNT were mixed in a weight ratio of 9.8:10:0.52 and used as the conductive material.

The negative electrode slurry was applied onto a copper collector sheet, dried, and then rolled to prepare a negative electrode having a loading amount of 7.36 $mAh/cm^2$.

<Manufacture of lithium secondary battery>

A separator was interposed between the positive electrode and the negative electrode prepared as described above to produce an electrode assembly, and the electrode assembly was inserted into a battery case. Thereafter, an electrolyte was injected to manufacture a lithium secondary battery A.

**Preparation Examples 2 and 3**

Lithium secondary batteries B and C were manufactured in the same manner as in Preparation Example 1, except that loading amounts of the positive and negative electrodes were changed as listed in Table 1 below.

**Preparation Example 4**

<Preparation of positive electrode>

A positive electrode active material, a conductive material, and a PVDF binder were mixed in N-methylpyrrolidone in a weight ratio of 96:1:3 to prepare a positive electrode slurry. In this case, $Li_{1.143}[Ni_{0.35}Mn_{0.65}]_{0.857}O_2$ coated with Al (1500 ppm) was used as the positive electrode active material, and a carbon nanotube was used as the conductive material.

The positive electrode slurry was applied onto an aluminum collector sheet, dried, and then rolled to prepare a positive electrode having a loading amount of 3.03 mAh/cm$^2$.

<Preparation of negative electrode>

A negative electrode active material, a conductive material, and an acrylic binder were mixed in water in a weight ratio of 70 : 20.3 : 9.7 to prepare a negative electrode slurry. In this case, Si particles having an average particle diameter of 5 $\mu$m (from Elkem) were used as the negative electrode active material, and carbon black, graphite, and CNT were mixed in a weight ratio of 9.8:10:0.52 and used as the conductive material.

The negative electrode slurry was applied onto a copper collector sheet, dried, and then rolled to prepare a negative electrode having a loading amount of 11.90 mAh/cm$^2$.

<Manufacture of lithium secondary battery>

A separator was interposed between the positive electrode and the negative electrode prepared as described above to produce an electrode assembly, and the electrode assembly was inserted into a battery case. Thereafter, an electrolyte was injected to manufacture a lithium secondary battery D.

**Preparation Examples 5 to 7**

Lithium secondary batteries E to G were prepared in the same manner as in Preparation Example 4, except that the loading amounts of the positive and negative electrodes were changed as described in Table 1 below.

**Preparation Examples 8**

<Preparation of positive electrode>

A positive electrode active material, a conductive material, and a PVDF binder were mixed in N-methylpyrrolidone in a weight ratio of 96:1:3 to prepare a positive electrode slurry. In this case, $Li_{1.143}[Ni_{0.35}Mn_{0.65}]_{0.857}O_2$ applied with 1500 ppm Al was used as the positive electrode active material, and carbon nanotubes were used as the conductive material.

The positive electrode slurry was applied onto an aluminum collector sheet, dried, and then rolled to prepare a positive electrode having a loading amount of 3.03 mAh/cm$^2$.

<Preparation of negative electrode>

A negative electrode active material, a conductive material, and an acrylic binder were mixed in water in a weight ratio of 70 : 20.3 : 9.7 to prepare a negative electrode slurry. In this case, Si particles having an average particle diameter of 5 $\mu$m (from Elkem) were used as the negative electrode active material, and carbon black, graphite, and CNT were mixed in

a weight ratio of 9.8:10:0.52 and used as the conductive material.

The negative electrode slurry was applied onto a copper collector sheet, dried, and then rolled to prepare a negative electrode having a loading amount of 7.75 $mAh/cm^2$.

<Manufacture of lithium secondary battery>

A separator was interposed between the positive electrode and the negative electrode prepared as described above to produce an electrode assembly, and the electrode assembly was inserted into a battery case. Thereafter, an electrolyte was injected to manufacture a lithium secondary battery.

Then, the lithium secondary battery was charged up to 4.65 V to activate $Li_2MnO_3$ phase of the positive electrode active material to pre-lithiate the negative electrode, thereby obtaining a lithium secondary battery F, and in the case, the pre-lithiation degree of the negative electrode was about 5.4%.

**Preparation Examples 9 to 11**

Lithium secondary batteries I to K were manufactured in the same manner as in Preparation Example 8, except that a loading amount of the positive electrode was changed as listed in Table 1 below. In this case, the pre-lithiation degrees of the negative electrodes of the lithium secondary batteries I to K are as shown in Table 1 below.

The N/P ratio, Si charge depth, and pre-lithiation degree of the lithium secondary batteries A to K manufactured as described above are shown in Table 1 below.

[Table 1]

| | Batter y # | Positi ve electr ode loadin g amount ($mAh/cm^2$) | Negati ve electr ode loadin g amount ($mAh/cm^2$) | NP ratio (%) | Prelithia tion degree (%) | Si charge depth (%) |
|---|---|---|---|---|---|---|
| Preparation Example 1 | A | 3.50 | 7.36 | 210.3 | - | 47.6 |
| Preparation Example 2 | B | 4.00 | 7.36 | 184.0 | - | 54.3 |
| Preparation Example 3 | C | 4.50 | 7.36 | 163.6 | - | 61.1 |
| Preparation Example 4 | D | 3.03 | 11.90 | 392.7 | - | 25.5 |
| Preparation Example 5 | E | 4.52 | 8.73 | 193.1 | - | 51.8 |
| Preparation Example 6 | F | 3.03 | 7.75 | 255.8 | - | 39.1 |
| Preparation Example 7 | G | 4.03 | 7.75 | 192.3 | - | 52.0 |
| Preparation Example 8 | H | 3.03 | 7.75 | 255.8 | 5.4 | 44.5 |
| Preparation Example 9 | I | 3.52 | 7.75 | 220.2 | 6.2 | 51.7 |
| Preparation Example 10 | J | 4.03 | 7.75 | 192.3 | 7.2 | 59.2 |
| Preparation Example 11 | K | 4.50 | 7.75 | 172.2 | 8.0 | 66.0 |
| [00166] **Examples and Comparative Examples** | | | | | | |

The number of cycles up to the point where capacity retention reached 80% (the number of cycles to reach 80% life) and cell energy density were measured while charging/discharging lithium secondary batteries A to K. In this case, the charge/discharge was performed under the conditions of 25 °C, 1 C/0.5 C, CCCV mode, and the charge cut-off voltage was set to 4.4 V, and the discharge cut-off voltage was set such that the Si discharge depth had the values shown in [Table 2] below. The measurement results are shown in table 2 below. In addition, the usable SOC in the charge/discharge voltage range of each lithium secondary battery is shown in Table 2.

[Table 2]

| | Batt ery # | Usab le SOC | NP rati o (%) | Si char ge dept h (%) | Si disc harg e dept h (%) | Si usag e rang e (%) | Cell ener gy dens ity (Wh/ L) | No. of cycl es to reac h 80% life |
|---|---|---|---|---|---|---|---|---|
| Example 1 | A | 65 | 210. 3 | 47.6 | 16.6 | 31.0 | 476 | 506 |
| Example 2 | B | 65 | 184. 0 | 54.3 | 19.0 | 35.3 | 477 | 459 |
| Example 3 | E | 63 | 193. 1 | 51.8 | 19.2 | 32.6 | 467 | 818 |
| Example 4 | E | 69 | 193. 1 | 51.8 | 16.1 | 35.7 | 502 | 664 |
| Example 5 | E | 75 | 193. 1 | 51.8 | 12.9 | 38.9 | 546 | 497 |
| Example 6 | H | 85 | 255. 8 | 44.5 | 11.2 | 33.3 | 506 | 477 |
| Example 7 | H | 80 | 255. 8 | 44.5 | 13.2 | 31.3 | 480 | 572 |
| Example 8 | H | 70 | 256. 0 | 44.5 | 17.1 | 27.4 | 426 | 749 |
| Comparative Example 1 | C | 65 | 163. 6 | 61.1 | 21.4 | 39.7 | 458 | 306 |
| Comparative Example 2 | D | 100 | 392. 7 | 25.5 | 0.0 | 25.5 | 528 | 143 |
| Comparative Example 3 | E | 91 | 193. 1 | 51.8 | 4.7 | 47.1 | 643 | 299 |
| Comparative Example 4 | E | 97 | 193. 1 | 51.8 | 1.6 | 50.2 | 682 | 214 |
| Comparative Example 5 | H | 100 | 255. 8 | 44.5 | 5.4 | 39.1 | 580 | 271 |
| Comparative Example 6 | F | 100 | 256. 8 | 39.1 | 0.0 | 39.1 | 583 | 171 |
| Comparative Example 7 | I | 100 | 220. 2 | 51.7 | 6.2 | 45.5 | 617 | 198 |
| Comparative Example 8 | J | 100 | 192. 3 | 59.2 | 7.2 | 52.0 | 647 | 174 |
| Comparative Example 9 | G | 100 | 192. 3 | 52.0 | 0.0 | 52.0 | 674 | 141 |
| Comparative Example 10 | K | 100 | 172. 2 | 66.0 | 8.0 | 58.0 | 675 | 109 |
| Comparative Example 11 | K | 65 | 172. 2 | 66.0 | 28.3 | 37.7 | 460 | 263 |
| Comparative Example 12 | H | 95 | 255. 8 | 44.5 | 7.3 | 37.2 | 579 | 264 |

As shown in Table 1 above, in the lithium secondary batteries of Examples 1 to 8 in which Si charge depth is 30% to 60% and Si discharge depth satisfies 10% to 20%, the number of cycles to reach 80% life was shown to be as high as 450 or more in spite of using Si as a negative electrode active material. In contrast, in Comparative Examples 1 to 12, in which either the Si charge depth or the Si discharge depth is outside the range of the present invention, it is seen that the cell energy density was shown to be excellent, but the number of cycles to reach 80% life was significantly reduced.

## Claims

1. A lithium secondary battery comprising: a negative electrode comprising a negative electrode active material; a positive electrode comprising a positive electrode active material; a separator interposed between the negative electrode and the positive electrode; and an electrolyte,

   wherein the negative electrode active material comprises silicon particles,
   the positive electrode active material comprises an overlithiated manganese-based oxide represented by Formula 1 below, and
   a Si charge depth represented by Equation 1 below is 30% to 60%, and a Si discharge depth represented by Equation 2 below is 10% or greater,

   [Formula 1] $Li_aNi_bCo_cMn_dM_eO_2$

   wherein in Formula 1 above, $1<a$, $0\leq b\leq 0.5$, $0\leq c\leq 0.1$, $0.5\leq d<1.0$, and $0\leq e\leq 0.2$ are satisfied, and M is at least one selected from the group consisting of Al, B, Co, W, Mg, V, Ti, Zn, Ga, In, Ru, Nb, Sn, Sr, and Zr;

$$\text{Si charge depth (\%)} = \{\text{(positive electrode loading amount+ pre-lithiation capacity of negative electrode)/negative electrode loading amount}\} \times 100 \quad \text{Equation 1:}$$

wherein in Equation 1 above, the positive electrode loading amount indicates capacity per unit area of the positive electrode (unit: $mAh/cm^2$) as determined according to the description, the negative electrode loading amount indicates capacity per unit area of the negative electrode (unit: $mAh/cm^2$) as determined according to the description, and the pre-lithiation capacity of the negative electrode indicates capacity per unit area (unit: $mAh/cm^2$) of lithium (Li) inserted into the negative electrode through pre-lithiation; and

$$\text{Si discharge depth (\%)} = \{\text{(positive electrode loading amount + pre-lithiation capacity of negative electrode - discharge loading amount)/negative electrode loading amount}\} \times 100 \quad \text{Equation 2:}$$

where in Equation 2 above, the positive electrode loading amount indicates capacity per unit area of the positive electrode (unit: $mAh/cm^2$) as determined according to the description, the negative electrode loading amount indicates capacity per unit area of the negative electrode (unit: $mAh/cm^2$) as determined according to the description, the pre-lithiation capacity of the negative electrode indicates capacity per unit area (unit: $mAh/cm^2$) of lithium (Li) inserted into the negative electrode through pre-lithiation, and the discharge loading amount indicates a value obtained by dividing discharge capacity of a secondary battery by positive electrode area at discharge cut-off voltage.

**2.** The lithium secondary battery of claim 1, wherein the negative electrode active material is formed of silicon particles.

**3.** The lithium secondary battery of claim 1, wherein the Si charge depth is 40% to 60%.

**4.** The lithium secondary battery of claim 1, wherein the Si discharge depth is 10% to 30%.

**5.** The lithium secondary battery of claim 1, wherein the lithium secondary battery has a Si usage range of 10% to 50%, where the Si usage range is represented by Equation 3 below:

$$\text{Si usage range (\%)} = \text{Si charge depth - Si discharge depth.} \quad \text{Equation 3:}$$

**6.** The lithium secondary battery of claim 1, wherein the lithium secondary battery has an N/P ratio, which is a percentage of negative electrode loading amount to positive electrode loading amount, of 150% to 300%.

**7.** The lithium secondary battery of claim 1, wherein the lithium secondary battery has an N/P ratio, which is a percentage of negative electrode loading amount to positive electrode loading amount, of 180% to 300%.

**8.** The lithium secondary battery of claim 1, wherein the negative electrode is a pre-lithiated negative electrode, and has a pre-lithiation degree of 5% to 50%, where the pre-lithiation degree is represented by Equation 4 below:

$$\text{pre-lithiation degree (\%)} = \{\text{capacity per unit area of Li inserted into negative electrode through pre-lithiation / capacity per unit area of Si}\} \times 100 \quad \text{Equation 4:}$$

**9.** The lithium secondary battery of claim 8, wherein the pre-lithiation degree is 5% to 30%.

**10.** The lithium secondary battery of claim 1, wherein the overlithiated manganese-based oxide is represented by Formula 2 below:

[Formula 2] $X\ Li_2MnO_3\cdot(1-X)Li[Ni_{1-y-z-w}Mn_yCo_zM_w]O_2$

wherein in Formula 2 above,
M is at least one selected from the group consisting of Al, B, Co, W, Mg, V, Ti, Zn, Ga, In, Ru, Nb, Sn, Sr, and Zr, and

$0.2 \leq X \leq 0.5$, $0.4 \leq y < 1$, $0 \leq z \leq 0.1$, and $0 \leq w \leq 0.2$ are satisfied.

**11.** The lithium secondary battery of claim 1, wherein the positive electrode active material has a D50 of 2 μm to 10 μm as determined by a laser diffraction method.

**12.** The lithium secondary battery of claim 1, wherein the positive electrode active material has a BET specific surface area of 1 $m^2$/g to 10 $m^2$/g.

**13.** The lithium secondary battery of claim 1, wherein the positive electrode has an initial irreversible capacity of 5% to 70% as determined according to the description.

**14.** The lithium secondary battery of claim 1, wherein the positive electrode has an electrode density of 2.5 g/$cm^3$ (g/cc) to 3.8 g/$cm^3$ (g/cc).

**15.** The lithium secondary battery of claim 1, wherein the lithium secondary battery reaches 80% life after 400 cycles or more as determined according to the description.

## Patentansprüche

**1.** Lithiumsekundärbatterie, umfassend: eine negative Elektrode, umfassend ein Negativelektrodenaktivmaterial; eine positive Elektrode, umfassend ein Positivelektrodenaktivmaterial; einen Separator, angeordnet zwischen der negativen Elektrode und der positiven Elektrode; und einen Elektrolyten,

wobei das Negativelektrodenaktivmaterial Siliciumpartikel umfasst,
das Positivelektrodenaktivmaterial ein überlithiiertes manganbasiertes Oxid, dargestellt durch die nachstehende Formel 1, umfasst, und
eine durch die nachstehende Gleichung 1 dargestellte Si-Ladetiefe 30% bis 60% beträgt und eine durch die nachstehende Gleichung 2 dargestellte Si-Entladetiefe 10% oder mehr beträgt,

[Formel 1] $Li_aNi_bCo_cMn_dM_eO_2$

wobei in der obigen Formel 1 $1<a$, $0 \leq b \leq 0{,}5$, $0 \leq c \leq 0{,}1$, $0{,}5 \leq d < 1{,}0$ und $0 \leq e \leq 0{,}2$ erfüllt sind und M mindestens eines, ausgewählt der Gruppe, bestehend aus Al, B, Co, W, Mg, V, Ti, Zn, Ga, In, Ru, Nb, Sn, Sr und Zr, ist;

Gleichung 1: Si-Ladetiefe (%) = {(Ladungsmenge der positiven Elektrode + Vorlithiierungskapazität der negativen Elektrode)/Ladungsmenge der negativen Elektrode} ×100

wobei in der obigen Gleichung 1 die Ladungsmenge der positiven Elektrode die Kapazität pro Flächeneinheit der positiven Elektrode (Einheit: mAh/$cm^2$), bestimmt gemäß der Beschreibung, angibt, die Ladungsmenge der negativen Elektrode die Kapazität pro Flächeneinheit der negativen Elektrode (Einheit: mAh/$cm^2$), bestimmt gemäß der Beschreibung, angibt, die Vorlithiierungskapazität der negativen Elektrode die Kapazität pro Flächeneinheit (Einheit: mAh/$cm^2$) von durch Vorlithiierung in die negative Elektrode eingebrachtem Lithium (Li) angibt; und

Gleichung 2: Si-Entladungstiefe (%) = {(Ladungsmenge der positiven Elektrode + Vorlithiierungskapazität der negativen Elektrode - Entladungsladungsmenge)/Ladungsmenge der negativen Elektrode} ×100

wobei in der obigen Gleichung 2 die Ladungsmenge der positiven Elektrode die Kapazität pro Flächeneinheit der positiven Elektrode (Einheit: mAh/$cm^2$), bestimmt gemäß der Beschreibung, angibt, die Ladungsmenge der negativen Elektrode die Kapazität pro Flächeneinheit der negativen Elektrode (Einheit: mAh/$cm^2$), bestimmt gemäß der Beschreibung, angibt, die Vorlithiierungskapazität der negativen Elektrode die Kapazität pro Flächeneinheit (Einheit: mAh/$cm^2$) von durch Vorlithiierung in die negative Elektrode eingebrachtem Lithium (Li) angibt und die Entladungsladungsmenge einen Wert, erhalten durch Teilen der Entladekapazität einer Sekundärbatterie durch die positive Elektrodenfläche bei der Entladungsabschaltspannung, angibt.

2. Lithiumsekundärbatterie gemäß Anspruch 1, wobei das Negativelektrodenaktivmaterial aus Siliciumpartikeln gebildet ist.

3. Lithiumsekundärbatterie gemäß Anspruch 1, wobei die Si-Ladetiefe 40% bis 60% beträgt.

4. Lithiumsekundärbatterie gemäß Anspruch 1, wobei die Si-Entladetiefe 10% bis 30% beträgt.

5. Lithiumsekundärbatterie gemäß Anspruch 1, wobei die Lithiumsekundärbatterie einen Si-Verwendungsbereich von 10% bis 50% aufweist, wobei der Si-Verwendungsbereich durch die nachstehende Gleichung 3 dargestellt wird:

Si-Verwendungsbereich (%) = Si-Ladetiefe - Si-Entladetiefe. Gleichung 3:

6. Lithiumsekundärbatterie gemäß Anspruch 1, wobei die Lithiumsekundärbatterie ein N/P-Verhältnis, das ein Prozentsatz der Ladungsmenge der negativen Elektrode zu der Ladungsmenge der positiven Elektrode ist, von 150% bis 300% aufweist.

7. Lithiumsekundärbatterie gemäß Anspruch 1, wobei die Lithiumsekundärbatterie ein N/P-Verhältnis, das ein Prozentsatz der Ladungsmenge der negativen Elektrode zu der Ladungsmenge der positiven Elektrode ist, von 180% bis 300% aufweist.

8. Lithiumsekundärbatterie gemäß Anspruch 1, wobei die negative Elektrode eine vorlithiierte negative Elektrode ist und einen Vorlithiierungsgrad von 5% bis 50% aufweist, wobei der Vorlithiierungsgrad durch die nachstehende Gleichung 4 dargestellt wird:

Vorlithiierungsgrad (%) = {Kapazität pro Flächeneinheit von durch Vorlithiierung in die negative Elektrode eingebrachtem Li / Kapazität pro Flächeneinheit des Si} $\times$ 100 Gleichung 4:

9. Lithiumsekundärbatterie gemäß Anspruch 8, wobei der Vorlithiierungsgrad 5% bis 30% beträgt.

10. Lithiumsekundärbatterie gemäß Anspruch 1, wobei das überlithiierte manganbasierte Oxid durch die nachstehende Formel 2 dargestellt wird:

[Formel 2] $X\ Li_2MnO_3 \cdot (1-X)Li\ [Ni_{1-y-z-w}Mn_yCo_zM_w]O_2$

wobei in der obigen Formel 2
M mindestens eines, ausgewählt aus der Gruppe, bestehend aus Al, B, Co, W, Mg, V, Ti, Zn, Ga, In, Ru, Nb, Sn, Sr und Zr, ist und $0{,}2 \leq X \leq 0{,}5$, $0{,}4 \leq y < 1$, $0 \leq z \leq 0{,}1$ und $0 \leq w \leq 0{,}2$ erfüllt sind.

11. Lithiumsekundärbatterie gemäß Anspruch 1, wobei das Positivelektrodenaktivmaterial einen D50-Wert von 2 µm bis 10 µm, bestimmt durch ein Laserbeugungsverfahren, aufweist.

12. Lithiumsekundärbatterie gemäß Anspruch 1, wobei das Positivelektrodenaktivmaterial eine BET-spezifische Oberfläche von 1 $m^2/g$ bis 10 $m^2/g$ aufweist.

13. Lithiumsekundärbatterie gemäß Anspruch 1, wobei die positive Elektrode eine anfängliche irreversible Kapazität von 5% bis 70%, bestimmt gemäß der Beschreibung, aufweist.

14. Lithiumsekundärbatterie gemäß Anspruch 1, wobei die positive Elektrode eine Elektrodendichte von 2,5 $g/cm^3$ (g/cc) bis 3,8 $g/cm^3$ (g/cc) aufweist.

15. Lithiumsekundärbatterie gemäß Anspruch 1, wobei die Lithiumsekundärbatterie nach 400 oder mehr Zyklen eine Lebensdauer von 80%, bestimmt gemäß der Beschreibung, erreicht.

## Revendications

1. **Batterie** secondaire au lithium comprenant : une électrode négative comprenant un matériau actif d'électrode négative ; une électrode positive comprenant un matériau actif d'électrode positive ; un séparateur intercalé entre l'électrode négative et l'électrode positive ; et un électrolyte,

   dans laquelle le matériau actif d'électrode négative comprend des particules de silicium,
   le matériau actif d'électrode positive comprend un oxyde à base de manganèse surlithié représenté par la Formule 1 ci-dessous, et
   une profondeur de charge de Si représentée par l'Équation 1 ci-dessous est de 30 % à 60 % et une profondeur de décharge de Si représentée par l'Équation 2 ci-dessous est de 10 % ou plus,

   [Formule 1] $Li_aNi_bCo_cMn_dM_eO_2$

   dans laquelle dans la Formule 1 ci-dessus, $1 < a$, $0 \leq b \leq 0,5$, $0 \leq c \leq 0,1$, $0,5 \leq d < 1,0$ et $0 \leq e \leq 0,2$ sont satisfaits et M est au moins un élément sélectionné à partir du groupe consistant en Al, B, Co, W, Mg, V, Ti, Zn, Ga, In, Ru, Nb, Sn, Sr et Zr ;

   Équation 1 : profondeur de charge de Si (%) = {(quantité de charge d'électrode positive+ capacité de prélithiation d'électrode négative)/quantité de charge d'électrode négative} x 100 Equation 1:

   dans laquelle dans l'Équation 1 ci-dessus, la quantité de charge d'électrode positive indique une capacité par unité de surface de l'électrode positive (unité : $mAh/cm^2$) comme déterminé selon la description, la quantité de charge d'électrode négative indique une capacité par unité de surface de l'électrode négative (unité : $mAh/cm^2$) comme déterminé selon la description, et la capacité de prélithiation de l'électrode négative indique une capacité par unité de surface (unité : $mAh/cm^2$) de lithium (Li) inséré dans l'électrode négative par prélithiation ; et

   Équation 2 : profondeur de décharge de Si (%) = {(quantité de charge d'électrode positive + capacité de prélithiation d'électrode négative - quantité de charge de décharge)/quantité de charge d'électrode négative} x 100 Equation 2:

   où dans l'Équation 2 ci-dessus, la quantité de charge d'électrode positive indique une capacité par unité de surface de l'électrode positive (unité : $mAh/cm^2$) comme déterminé selon la description, la quantité de charge d'électrode négative indique une capacité par unité de surface de l'électrode négative (unité : $mAh/cm^2$) comme déterminé selon la description, la capacité de prélithiation de l'électrode négative indique une capacité par unité de surface (unité : $mAh/cm^2$) de lithium (Li) inséré dans l'électrode négative par prélithiation et la quantité de charge de décharge indique une valeur obtenue en divisant une capacité de décharge d'une batterie secondaire par zone d'électrode positive à une tension de coupure de décharge.

2. Batterie secondaire au lithium selon la revendication 1, dans laquelle le matériau actif d'électrode négative est constitué de particules de silicium.

3. Batterie secondaire au lithium selon la revendication 1, dans laquelle la profondeur de charge de Si est de 40 % à 60 %.

4. Batterie secondaire au lithium selon la revendication 1, dans laquelle la profondeur de décharge de Si est de 10 % à 30 %.

5. Batterie secondaire au lithium selon la revendication 1, dans laquelle la batterie secondaire au lithium présente une plage d'utilisation de Si de 10 % à 50 %, où la plage d'utilisation de Si est représentée par l'Équation 3 ci-dessous :

   Équation 3 : plage d'utilisation de Si (%) = profondeur de charge de Si - profondeur de décharge de Si. Equation 3:

6. Batterie secondaire au lithium selon la revendication 1, dans laquelle la batterie secondaire au lithium présente un rapport N/P, qui est un pourcentage de quantité de charge d'électrode négative par rapport à une quantité de charge

d'électrode positive, de 150 % à 300 %.

**7.** Batterie secondaire au lithium selon la revendication 1, dans laquelle la batterie secondaire au lithium présente un rapport N/P, qui est un pourcentage de quantité de charge d'électrode négative par rapport à une quantité de charge d'électrode positive, de 180 % à 300 %.

**8.** Batterie secondaire au lithium selon la revendication 1, dans laquelle l'électrode négative est une électrode négative prélithiée et présente un degré de prélithiation de 5 % à 50 %, où le degré de prélithiation est représenté par l'Équation 4 ci-dessous :

Équation 4 : degré de prélithiation (%) = {capacité par unité de surface de Li inséré dans l'électrode négative par prélithiation/capacité par unité de surface de Si} x 100 Equation 4:

**9.** Batterie secondaire au lithium selon la revendication 8, dans laquelle le degré de prélithiation est de 5 % à 30 %.

**10.** Batterie secondaire au lithium selon la revendication 1, dans laquelle l'oxyde à base de manganèse surlithié est représenté par la Formule 2 ci-dessous :

[Formule 2] $X\ Li_2MnO_3\{1\text{-}X)Li[Ni_{1-y-z-w}Mn_yCo_zM_w]O_2$

dans laquelle dans la Formule 2 ci-dessus,
M est au moins un élément sélectionné à partir du groupe consistant en Al, B, Co, W, Mg, V, Ti, Zn, Ga, In, Ru, Nb, Sn, Sr et Zr et $0,2 \le X \le 0,5$, $0,4 \le y < 1$, $0 \le z \le 0,1$ et $0 \le w \le 0,2$ sont satisfaits.

**11.** Batterie secondaire au lithium selon la revendication 1, dans laquelle le matériau actif d'électrode positive présente une D50 de 2 μm à 10 μm comme déterminé par un procédé de diffraction laser.

**12.** Batterie secondaire au lithium selon la revendication 1, dans laquelle le matériau actif d'électrode positive présente une superficie spécifique BET de 1 $m^2/g$ à 10 $m^2/g$.

**13.** Batterie secondaire au lithium selon la revendication 1, dans laqquelle l'électrode positive présente une capacité irréversible initiale de 5 % à 70 % comme déterminé selon la description.

**14.** Batterie secondaire au lithium selon la revendication 1, dans laquelle l'électrode positive présente un densité d'électrode de 2,5 $g/^{cm}$ (g/cm3) à 3,8 $g/cm^3$ (g/cm3).

**15.** Batterie secondaire au lithium selon la revendication 1, dans laquelle la batterie secondaire au lithium atteint 80 % de sa durée de vie après 400 cycles ou plus comme déterminé selon la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210131946
- KR 1020220127249
- US 20200036035 A1
- US 20200251728 A1
- EP 3863105 A
- US 20130149609 A